# EUROPEAN PATENT SPECIFICATION

(11) **EP 1 271 004 B1**
(45) Date of publication and mention of the grant of the patent: **25.04.2012**
(21) Application number: 02012924.3
(22) Date of filing: 11.06.2002
(51) Int. Cl.: F16H 61/00

(54) **Hydraulic controller for transmission**
Hydraulische Steuervorrichtung für ein Getriebe
Dispositif de commande hydraulique pour transmissions

(30) Priority: 18.06.2001 JP 2001182817
(43) Date of publication of application: 02.01.2003
(73) Proprietor: HONDA GIKEN KOGYO KABUSHIKI KAISHA, Minato-ku Tokyo (JP)
(72) Inventor: Aoki, Akihira, c/o Kabushiki Kaisha Honda Gijyutsu Kenkyuusho, Wako-shi, Saitama (JP)
(74) Representative: Prechtel, Jörg

(56) References cited:
- JP-A- 3 189 455
- JP-A- 8 042 652
- US-A- 5 232 406
- US-B1- 6 219 608

## Description

### FIELD OF THE INVENTION

The present invention relates generally to a hydraulic controller that controls the charge and discharge of oil to hydraulic actuators which are integrated in a transmission for speed ratio control. Particularly, the present invention relates to a hydraulic controller for a transmission that comprises a belt-type continuously variable speed control mechanism.

### BACKGROUND OF THE INVENTION

Such an automatic transmission is designed for use in a vehicle to transmit the rotational driving force of an engine (drive power source) varying a speed ratio, in which the rotational speed being transmitted is controlled in correspondence to the throttle opening of the engine, the speed of the vehicle, etc. Such an automatic transmission generally comprises hydraulic actuators to achieve this speed ratio control. For example, an automatic transmission may comprise a belt-type continuously variable speed control mechanism disclosed in Japanese Utility-Model Publication No. S62(1987)-63448. In this case, the automatic transmission comprises shift control valves, which control the charge and discharge of oil to and from the drive and driven pulley cylinder chambers (hydraulic actuators) for a speed ratio change.

In this automatic transmission, to charge and discharge oil to and from the hydraulic actuators (drive and driven pulley cylinder chambers) in speed ratio control, the target pulley control pressures of the respective pulley cylinder chambers are determined from the transmission torque and the target speed ratio, and then, the hydraulic pressures charged and discharged by the shift control valves to and from the pulley cylinder chambers are set to the target pulley control pressures to change the speed ratio of the transmission to the target speed ratio. For the pressure control, each shift control valve comprises a solenoid whose actuation is controlled by the solenoid control current to achieve the target pulley control pressure, and the current is calculated from a relation between the solenoid control current of the shift control valve and the hydraulic pressure charged or discharged to or from the hydraulic actuator observed in stationary state.

In this prior art speed ratio control, because the control current is determined on a basis of operational characteristics of the shift control valve in stationary state, there is a problem that the speed ratio control tends to become inaccurate during a transition to a target speed ratio. This is because, in the speed ratio control, oil must be supplied to one of the drive and driven pulley cylinder chambers while some oil must be discharged from the other during a transition to a new speed ratio. While the oil charged and discharged to and from the drive and driven pulley cylinder chambers in this way is flowing through the shift control valves, flow forces are generated to act on the shift control valves. As a result, the hydraulic pressure charging oil tends to become lower than its target pulley control pressure while the hydraulic pressure discharging oil tends to become higher than its target pulley control pressure. This condition leads to low responsiveness of the transmission to a speed ratio change. Furthermore, when the temperature of the oil is low, the viscosity of the oil is high, so this problem of low responsiveness becomes easy to recognize.

US 5 232 406 A discloses an hydraulic controller in accordance with the preamble of claim 1.

### SUMMARY OF THE INVENTION

It is an object of the present invention to provide a hydraulic controller for a transmission, which controller can control appropriately the charge and discharge of oil to and from a hydraulic ratio-controlling actuator during a speed-change transition even if a large amount of oil is charged to and discharged from the ratio-controlling actuator in this speed ratio control.

For solving this object, the invention provides a hydraulic controller in accordance with claim 1.

According to the present invention, a transmission comprises a ratio-change mechanism (for example, the metal V-belt mechanism 10 described in the following embodiment, or another type of ratio-change mechanism), a hydraulic actuator (for example, the drive and driven cylinder chambers described in the following embodiment, other hydraulic cylinders, hydraulic clutches, hydraulic brakes, etc.) and a shift control valve (for example, the drive and driven shift control valves 60 and 65 described in the following embodiment, or other shift control valves). The ratio-change mechanism transmits the rotational driving force of a drive power source (for example, the engine ENG described in the following embodiment) changing a speed ratio, and the hydraulic actuator, by receiving a hydraulic pressure, actuates the ratio-change operation of the ratio-change mechanism. The shift control valve performs a pressure control for charging and discharging oil to and from the hydraulic actuator. For this transmission, a hydraulic controller comprises standard-value calculating means, oil-quantity calculating means and compensation-value calculating means. The standard-value calculating means calculates a standard-operation control value for the shift control valve to set a target control pressure, and this target control pressure is used to bring a ratio change in accordance to a ratio-change request made in correspondence to a driving condition. The oil-quantity calculating means calculates the quantity of oil to be charged and discharged to and from the hydraulic actuator through the shift control valve during the ratio change executed in accordance to the ratio-change request, and the compensation-value calculating means calculates a compensation control value to compensate the standard-operation control value on a basis of the quantity of oil charged and discharged, which quantity is calculated by the oil-quantity calculating means. In this hydraulic controller, an operation control value which is obtained by compensating the standard-operation control value with the compensation control value is used to control the operation of the shift control valve.

In the hydraulic controller, the standard-operation control value for setting a target control pressure is calculated by the standard-value calculating means on a basis of the characteristics of the shift control valve observed in a steady state. This standard-operation control value is compensated with the compensation control value calculated on a basis of the quantity of oil charged and discharged to and from the hydraulic actuator in the speed ratio change. Therefore, the effect of a flow force generated by a flow through the shift control valve when oil is charged and discharge to and from the hydraulic actuator during the ratio-change transition is offset by the compensation control value. As a result, the speed ratio control is performed accurately without any delay in response even during a rapid ratio-change transition. In this document of specification, term "quantity" used in phrases "quantity of oil charged and discharged", "quantity of oil charged" and "quantity of oil discharged" means quantity per unit time, i.e., it corresponds to flow rate.

According to another feature of the present invention, a transmission comprises a variable width drive pulley, a variable width driven pulley, belt means (for example, the metal V-belt 15 described in the following embodiment) disposed around these pulleys, a drive cylinder chamber provided in the drive pulley, a driven cylinder chamber provided in the driven pulley and a shift control valve (for example, the drive and driven shift control valves 60 and 65 described in the following embodiment), which performs a pressure control for charging and discharging oil to and from the drive and driven cylinder chambers. The hydraulic controller for this transmission comprises standard-value calculating means, oil-quantity calculating means and compensation-value calculating means. The standard-value calculating means calculates a standard-operation control value for the shift control valve to set target control pressures for the drive and driven cylinder chambers, the target control pressures being necessary for bringing a ratio change in accordance to a ratio-change request made in correspondence to a driving condition. The oil-quantity calculating means calculates the quantity of oil to be charged and discharged to and from the drive and driven cylinder chambers through the shift control valve for bringing a ratio change in accordance to the ratio-change request. The compensation-value calculating means calculates a compensation control value to compensate the standard-operation control value on a basis of the quantity of oil charged and discharged, which quantity is calculated by the oil-quantity calculating means. With this arrangement, the hydraulic controller uses an operation control value which is obtained by compensating the standard-operation control value with the compensation control value, to control the operation of the shift control valve.

This hydraulic controller, in the same way as the one described above, compensates the standard-operation control value with a compensation control value, which is calculated on a basis of the quantity of oil charged and discharged to and from the drive and driven cylinder chambers in the speed ratio change. Therefore, the effect of a flow force generated by a flow through the shift control valve when oil is charged and discharge to and from these pulley cylinder chambers during the ratio-change transition is offset by the compensation control value. As a result, the speed ratio control is performed accurately without any delay in response even during a rapid ratio-change transition.

The oil-quantity calculating means calculates a ratio-changing rate in accordance to the ratio-change request, and when it is necessary for the drive or driven cylinder chamber to be charged with oil through the shift control valve to achieve this ratio-changing rate, the oil-quantity calculating means calculates the quantity of oil to be charged to the drive or driven cylinder chamber through the shift control valve for achieving the ratio-changing rate. On the other hand, when it is necessary for the drive or driven cylinder chamber to be discharged of oil through the shift control valve to achieve the above mentioned ratio-changing rate, the oil-quantity calculating means calculates the quantity of oil to be discharged from the drive or driven cylinder chamber through the shift control valve for achieving the smaller of the two rates, i.e., the above mentioned ratio-changing rate or a ratio-changing rate obtained by filtering an actual ratio-changing rate.

If the rate of discharging the drive or driven cylinder chamber of oil during the ratio-change transition is too high, the lateral pressure of the pulley may become small enough to cause a slip of the belt. Therefore, the lower of the two, i.e., the ratio-changing rate based on the ratio-change request and the ratio-changing rate obtained by filtering the actual ratio-changing rate, is selected as the ratio-changing rate for the shift control valve to control the discharging pressure. In this way, any slip of the belt is prevented in the speed ratio control.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only and thus are not limitative of the present invention.
FIG. 1 is a cross-sectional view of a belt-type continuously variable transmission, whose speed ratio is controlled by a hydraulic controller according to the present invention.
FIG. 2 is a schematic diagram showing the power transmission paths of this belt-type continuously variable transmission.
FIG. 3 is a hydraulic circuit diagram showing a section of the hydraulic controller.
FIG. 4 is a hydraulic circuit diagram showing another section of the hydraulic controller.
FIG. 5 is a block diagram showing the construction of the hydraulic controller.
FIG. 6 is a flowchart showing control steps executed by the hydraulic controller.
FIG. 7 is another flowchart showing other control steps executed by the hydraulic controller.
FIG. 8 is a graph showing characteristics of highly and lowly responsive speed ratio changes, which are gained by filtering the chronological change of the actual speed ratio.
FIG. 9 is a schematic diagram describing the condition of the driven shift control valve, through which oil is being charged to the driven cylinder chamber.
FIG. 10 is a schematic diagram describing the condition of the driven shift control valve, through which oil is being discharged from the driven cylinder chamber.
FIG. 11 is a block diagram describing a method for calculating a charging control signal.
FIG. 12 is a graph showing relations between the oil temperature and the oil-temperature compensation factor.
FIG. 13 is a graph showing a relation between the flow rate and the flow compensation reference pressure.
FIG. 14 is a block diagram describing a method for calculating a discharging control signal for a gradual speed ratio change.
FIG. 15 is a block diagram describing a method for calculating a discharging control signal for a rapid speed ratio change.

### DESCRIPTION OF THE PREFERRED EMBODIMENTS

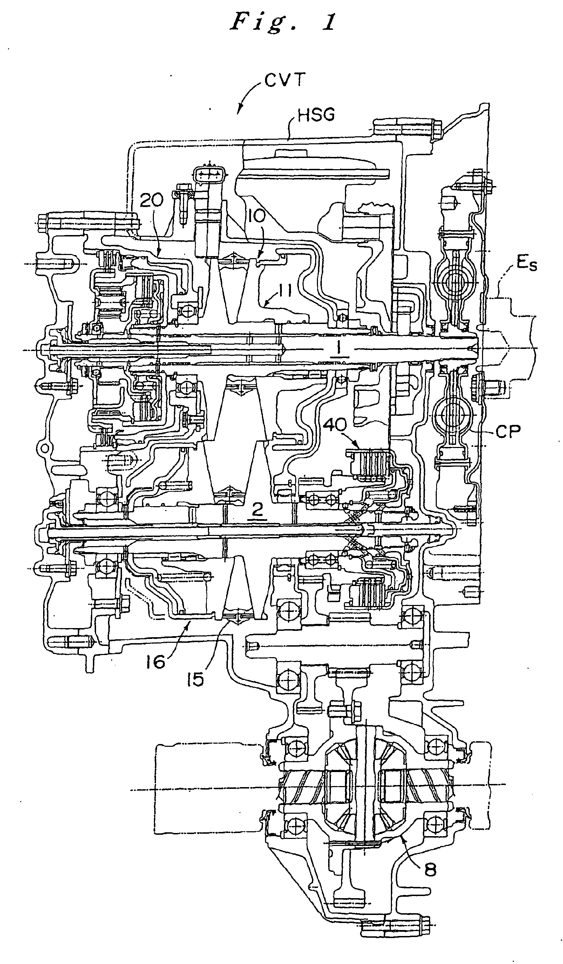

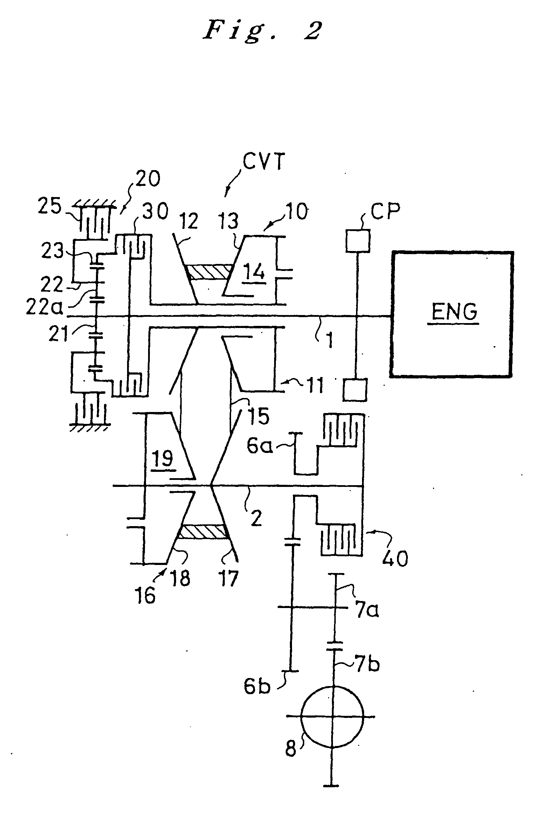

Now, a preferred embodiment of the present invention is described in reference to the drawings. FIGS. 1 and 2 show a belt-type continuously variable transmission CVT, whose ratio control is performed by a control system according to the present invention. This belt-type continuously variable transmission CVT comprises an input shaft 1, a countershaft 2, a metal V-belt mechanism 10, a planetary gear type forward/reverse direction change mechanism 20, a starting clutch mechanism 40, power transmission gear trains 6a, 6b, 7a and 7b, and a differential mechanism 8 in a transmission housing HSG. The input shaft 1 of the transmission is connected through a coupling mechanism CP to the output shaft Es of the engine ENG. The metal V-belt mechanism 10 connects rotationally the input shaft 1 and the countershaft 2, which is provided parallel with the input shaft 1. The forward/reverse direction change mechanism 20 is disposed over the input shaft 1, and the starting clutch mechanism 40 is disposed on the countershaft 2.

The metal V-belt mechanism 10 comprises a drive pulley 11, which is disposed over the input shaft 1, a driven pulley 16, which is disposed on the countershaft 2, and a metal V-belt 15, which is disposed around these pulleys 11 and 16. The drive pulley 11 comprises a stationary pulley half 12, which is disposed rotatably on the input shaft 1, and a movable pulley half 13, which rotates with stationary pulley half 12 and, at the same time, movable with respect to the stationary pulley half 12 in the axial direction of the pulley 11. The axial shift of the movable pulley half 13 is executed by the pressure supplied into a drive-pulley cylinder chamber 14 provided to the drive pulley 11. On the other hand, the driven pulley 16 comprises a stationary pulley half 17, which is fixed on the countershaft 2, and a movable pulley half 18, which rotates with the stationary pulley half 17 and movable with respect to the stationary pulley half 17 in the axial direction of the pulley. The axial shift of the movable pulley half 18 is executed by the pressure supplied into a driven-pulley cylinder chamber 19 provided to the driven pulley 16.

In this construction, the hydraulic pressure supplied to each of these cylinder chambers 14 and 19 is controlled to generate an appropriate thrust that acts on the respective movable pulley half 13 or 18 so as to vary appropriately the width of the drive or driven pulley 11 or 16. This pressure control enables the pitch radii of the respective pulleys 11 and 16 for the V belt 15 to change continuously, and thus the speed change ratio of the transmission is variable continuously.

The forward/reverse direction change mechanism 20 comprises a planetary gear train, which includes a sun gear 21, a carrier 22 and a ring gear 23. The sun gear 21 is connected to the input shaft 1, and the carrier 22 is rotatable coaxially with the sun gear 21 and retains rotatably a plurality of pinions 22a, which mesh with the sun gear 21. The ring gear 23 is also rotatable coaxially with the sun gear 21 and meshes with the pinions 22a. In addition, the forward/reverse direction change mechanism 20 includes a reverse brake 25, which can hold the carrier 22 stationary, and a forward clutch 30, which engages and disengages the sun gear 21 to and from the ring gear 23.

In this arrangement, when the forward clutch 30 is actuated for engagement while the reverse brake 25 is not engaged, the sun gear 21 and the ring gear 23 are connected with each other. In this condition, the sun gear 21, the carrier 22 and the ring gear 23 are all rotatable in unison with the input shaft 1, and the drive pulley 11 is rotatable in the same direction as the input shaft 1 (forward drive direction). On the other hand, when the forward clutch 30 is released and the reverse brake 25 is engaged, the carrier 22 is held stationary. In this condition, the ring gear 23 is rotatable in the direction opposite to that of the sun gear 21, so the drive pulley 11 is now rotatable in the direction opposite to that of the input shaft 1 (rearward drive direction).

The forward clutch 30 comprises a hydraulically actuated wet type multiple disc clutch, whose actuation for engagement and disengagement is controlled by means of the hydraulic pressure being applied thereto. In the same way, the reverse brake 25 comprises a hydraulically actuated wet type multiple disc brake, whose actuation for engagement and disengagement is controlled by means of the hydraulic pressure being applied thereto.

In this transmission, the rotation of the input shaft 1 is switched by the forward/reverse direction change mechanism 20 and transmitted to the drive pulley 11 either in the forward drive or rearward drive direction. The speed of this rotation is varied continuously by the metal V-belt mechanism 10 and is transmitted to the countershaft 2. Then, the starting clutch 40, which is mounted on the countershaft 2, controls the transmission of the drive power to a power transmission gear 6a. The starting clutch 40 also comprises a hydraulically actuated wet type multiple disc clutch, whose actuation for engagement and disengagement is controlled by means of the hydraulic pressure being applied thereto.

The rotational driving force being controlled by the starting clutch 40 and transmitted to the power transmission gear 6a is then transmitted through the power transmission gear trains 6a, 6b, 7a and 7b, which includes the power transmission gear 6a, and through the differential mechanism 8 to the right and left drive wheels (not shown). In this arrangement, by controlling the engagement of the starting clutch 40, the rotational driving force transmitted to the drive wheels is controllable. For example, the starting of the vehicle is controlled by the engagement control of the starting clutch 40.

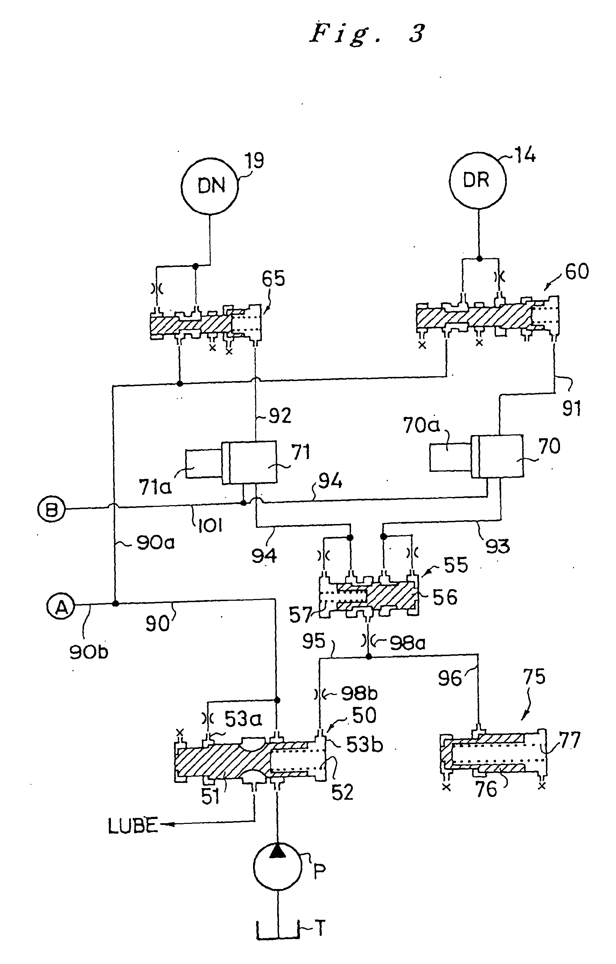

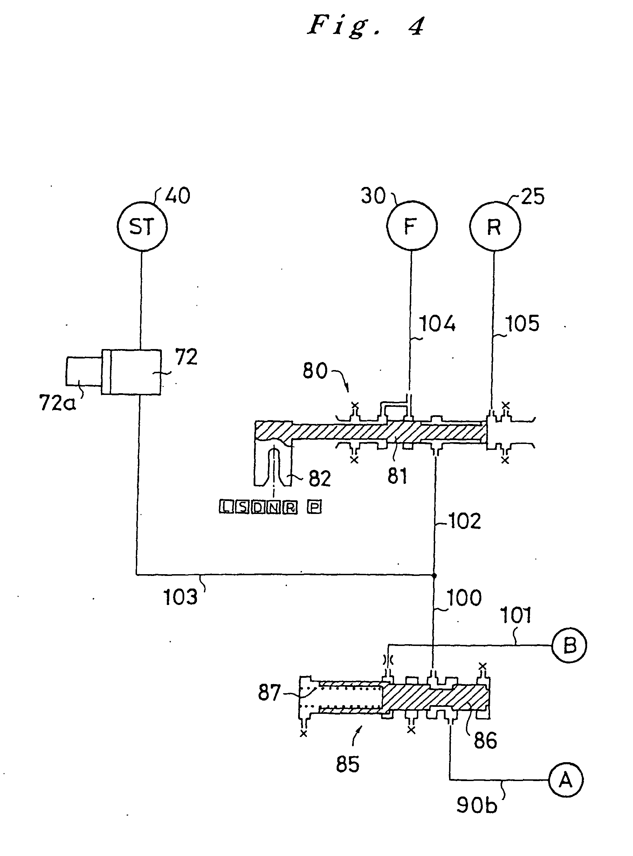

In this continuously variable transmission, the drive and driven cylinder chambers 14 and 19, which constitute the metal V-belt mechanism 10, are charged and discharged with oil to achieve a continuous or step-less speed ratio control of the transmission. Along with this continuous speed ratio control, the supply of the hydraulic pressure to the forward clutch 30 and the reverse brake 25 is controlled to achieve a forward/reverse direction-change while the hydraulic pressure for the engagement of the starting clutch 40 is also controlled to appropriately transmit the driving force to the drive wheels. The control system according to the present invention functions to manage these control operations. This control system is now described in reference to FIGS. 3 and 4. In these drawings, the ports marked with "x" are led to the drain of the hydraulic circuit, i.e., to the oil tank.

In this hydraulic controller, oil in the oil tank T (for example, the bottom space of the transmission housing HSG) is supplied by an oil pump P to a regulator valve 50, which adjusts the pressure of the oil and generates a line pressure PL. The oil at the line pressure PL is then supplied through lines 90 and 90a to a drive shift control valve 60, which controls the charge and discharge of the oil to and from the drive cylinder chamber 14, and to a driven shift control valve 65, which controls the charge and discharge of the oil to and from the driven cylinder chamber 19.

The drive shift control valve 60 is connected through line 91 to a drive control valve 70, which comprises a solenoid valve with a solenoid 70a. In correspondence to the control current being supplied to the solenoid 70a, the drive control valve 70 produces a drive signal pressure Pdr from the modulator pressure PM supplied through line 101 from a modulator valve 85 described in detail later in this section, and the drive signal pressure Pdr being so produced is led through line 91 to the drive shift control valve 60. In this arrangement, the drive shift control valve 60 in response to the drive signal pressure Pdr, charges or discharges the drive cylinder chamber 14 with the oil at the line pressure PL being supplied through lines 90 and 90a.

On the other hand, the driven shift control valve 65 is connected through line 92 to a driven control valve 71, which comprises a solenoid valve with a solenoid 71a. In correspondence to the control current being supplied to the solenoid 71a, the driven control valve 71 produces a driven signal pressure Pdn from the modulator pressure PM supplied through line 101, and the driven signal pressure Pdn being so produced is led through line 92 to the driven shift control valve 65. In this arrangement, the driven shift control valve 65 in response to the driven signal pressure Pdn, charges or discharges the driven cylinder chamber 19 with the oil at the line pressure PL being supplied through line 90 and 90a.

The drive signal pressure Pdr being produced by the drive control valve 70 and the driven signal pressure Pdn being produced by the driven control valve 71 are also supplied to a switching valve 55, respectively through line 93 and through line 94. The switching valve 55, which comprises a spool 56 and a spring 57, receives the drive signal pressure Pdr and the driven signal pressure Pdn with the right and left ends of the spool 56 as shown in the drawing. In this arrangement, the spool 56 is shifted rightward or leftward in correspondence to the balance of the forces exerted by the drive and driven signal pressures Pdr and Pdn and the spring 57, so the switching valve 55 functions to select the pressure higher of the two, through a passage created in this balance, i.e., the combined force exerted by the drive signal pressure Pdr and the spring being against the force exerted by the driven signal pressure Pdn. As a result, either the drive signal pressure Pdr or the driven signal pressure Pdn that is the higher of the two is led through a signal pressure supply line 95 to port 53b of the regulator valve 50.

In the regulator valve 50, which comprises a spool 51 and a spring 52, the line pressure PL being supplied through line 90 is adjusted against the signal pressure being supplied through the signal pressure supply line 95 in the balance of the forces exerted by the line pressure PL on one side of the spool 51 and by the signal pressure and the spring 52 on the other side. In other words, the line pressure PL is set in correspondence with the signal pressure being supplied through the signal pressure supply line 95 (as mentioned above, the signal pressure being supplied here is selected by the switching valve 55 as the higher of the two pressures, i.e., the drive signal pressure Pdr and the driven signal pressure Pdn). Therefore, as the line pressure PL changes in correspondence with the signal pressure supplied through the signal pressure supply line 95, it is possible to adjust the line pressure PL to a desired pressure by adjusting the signal pressure with the drive control valve 70 and the driven control valve 71.

The signal pressure supply line 95 is connected through line 96 to an accumulator 75, which comprises a spool 76 and a spring 77. The accumulator 75 functions to restrain the fluctuation of the pressure of the signal pressure supply line 95 by receiving the pressure with the spool 76, which slides against the biasing force of the spring 77. Additionally, the signal pressure supply line 95 is provided with a first orifice 98a and a second orifice 98b at positions before and after the accumulator 75 in the flow of oil as shown in the drawing.

As described above, the operation of the switching valve 55 to select either the drive signal pressure Pdr or the driven signal pressure Pdn is executed with the spool 56, which is shifted rightward or leftward. During the shift of the spool, there is a moment when the fluid communication between line 93 or 94 and the signal pressure supply line 95 is cut out. In this instance, the signal pressure supply line 95 is blocked off, so if this condition is left as it is, i.e., without the accumulator 75, a little movement of the spool 51 of the regulator valve 50 would cause an abrupt increase or a surge in the internal pressure. However, as the signal pressure supply line 95 is provided with the accumulator 75 through line 96, such a surge in the internal pressure cannot happen. In addition, the presence of the second orifice 98b between the regulator valve 50 and the accumulator 75 enhances the effect of reducing the occurrence of pressure surge.

In the condition where the signal pressure supply line 95 is in fluid communication with either line 93 or line 94, and either the drive signal pressure Pdr or the driven signal pressure Pdn is applied to port 53b of the regulator valve 50, the accumulator 75 restrains the fluctuation of the signal pressure (the drive signal pressure Pdr or the driven signal pressure Pdn) being supplied to the port. As a result, the fluctuation of the line pressure PL being adjusted by the regulator valve 50 is also minimized to stabilize the speed ratio control, which is executed with the line pressure PL. In addition, the presence of the first orifice 98a at the position shown in the drawing enhances the effect of reducing the fluctuation of the signal pressure.

On the other hand, the oil at the line pressure PL, which is adjusted by the regulator valve 50, is supplied also to the modulator valve 85 through line 90b, which is branched from line 90 (refer to FIG. 4). The modulator valve 85, which comprises a spool 86 and a spring 87, adjusts the pressure of line 100 to the modulator pressure PM that is a pressure equal to or lower than a predetermined pressure in the balance of the forces exerted on the spool 86 by the spring 87 and by the pressure of the line 100 downstream. As a result, line 100 is supplied with the oil whose pressure is adjusted to the modulator pressure PM, which is lower than the line pressure PL. If the line pressure PL is equal to or lower than the predetermined pressure, then the line pressure PL as is is supplied as the modulator pressure PM to line 100. The oil at the modulator pressure PM is also supplied through line 101 to the drive shift control valve 60 and the driven shift control valve 65.

Furthermore, the oil at the modulator pressure PM is supplied through line 102 to a manual valve 80. The manual valve comprises a spool 81, which is connected through a connector 82 to the shift lever at the driver's seat (not shown) and is axially movable in correspondence to the manipulation of the shift lever. In response to the shift of the spool 81 in the manual valve 80, the supply of the modulator pressure PM is directed either through line 104 to the forward clutch 30 or through line 105 to the reverse brake 25.

The modulator pressure PM is also supplied through line 103 branching from line 100 to a starting clutch control valve 72, which comprises a linear solenoid valve with a solenoid 72a for controlling the pressure of the oil supplied to the starting clutch 40. In correspondence to the control current being applied to the solenoid 72a, the starting clutch control valve 72 produces a starting clutch control pressure Pst from the modulator pressure PM, and the starting clutch control pressure Pst is supplied to the starting clutch 40 for the engagement control thereof.

In this hydraulic controller, the shift of the manual valve 80 leads correspondingly to the current control of the solenoid 70a of the drive control valve 70, the current control of the solenoid 71a of the driven control valve 71, and the current control of the solenoid 72a of the starting clutch control valve 72, which result in the above mentioned forward/reverse direction change, continuous speed ratio change and transmission of the driving force to the drive wheels. Now, the construction of the control system and the control steps executed by the control system are described in the following.

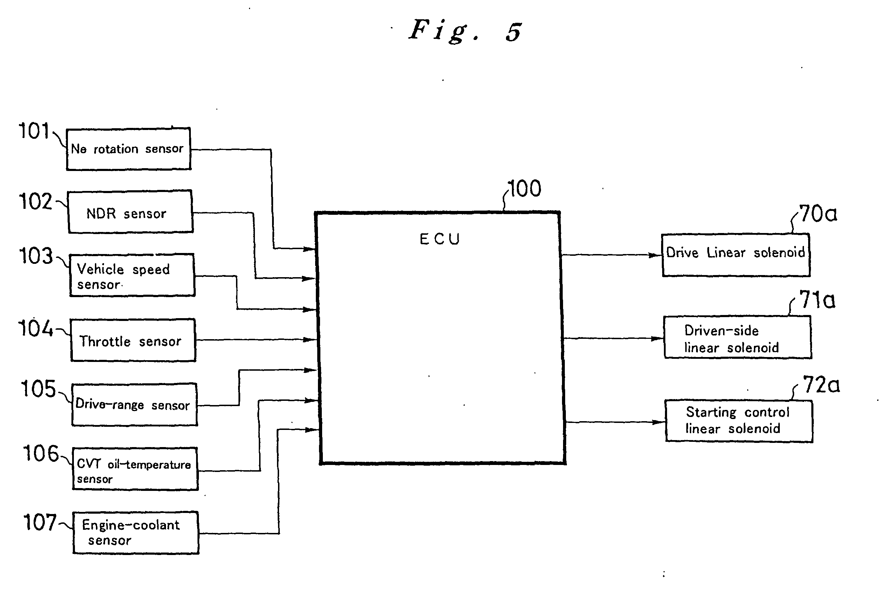

FIG. 5 shows schematically the construction of the control system. The above mentioned control is executed by control signals that are output from a control unit 100 to these solenoids 70a, 71a and 72a. For the determination of the control signals, the control unit 100 receives, as inputs, a signal NE from an engine rotation sensor 101, which detects the rotation of the engine, a signal NDR from a drive pulley rotation sensor 102, which detects the rotation of the drive pulley 11, a signal V from a vehicle speed sensor 103, which detects the speed of the vehicle, a signal θTH from a throttle sensor 104, which detects the throttle opening of the engine ENG, a signal RS from a drive-range sensor 105, which detects the current drive range, a signal TCVT from a CVT oil-temperature sensor 106, which detects the oil temperature of the transmission, and a signal TENG from an engine-coolant temperature sensor 107, which detects the temperature of the engine coolant.

This control system performs the forward/reverse direction-change control, the continuous speed ratio control, and the starting clutch engagement control. As the present invention relates to the speed ratio control of the transmission, the following description is focused on the continuous speed ratio control. This continuous speed ratio control is executed by controlling the currents applied to the solenoid 70a of the drive control valve 70 and to the solenoid 71a of the driven control valve 71, thereby controlling the operation of the drive and driven shift control valves 60 and 65, which control, in turn, the charge and discharge of oil to and from the drive and driven cylinder chambers 14 and 19.

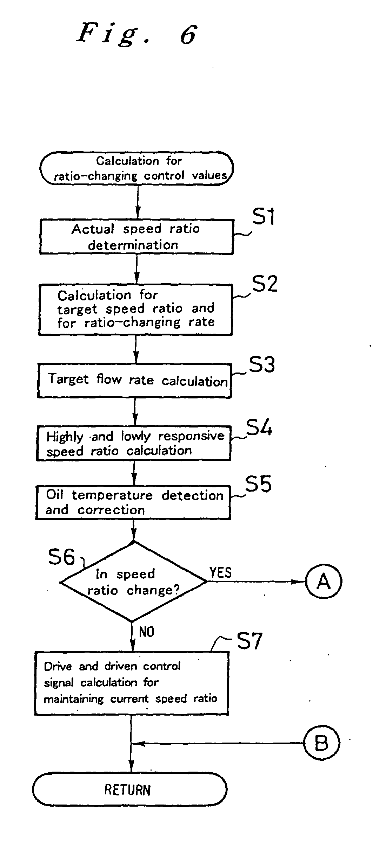

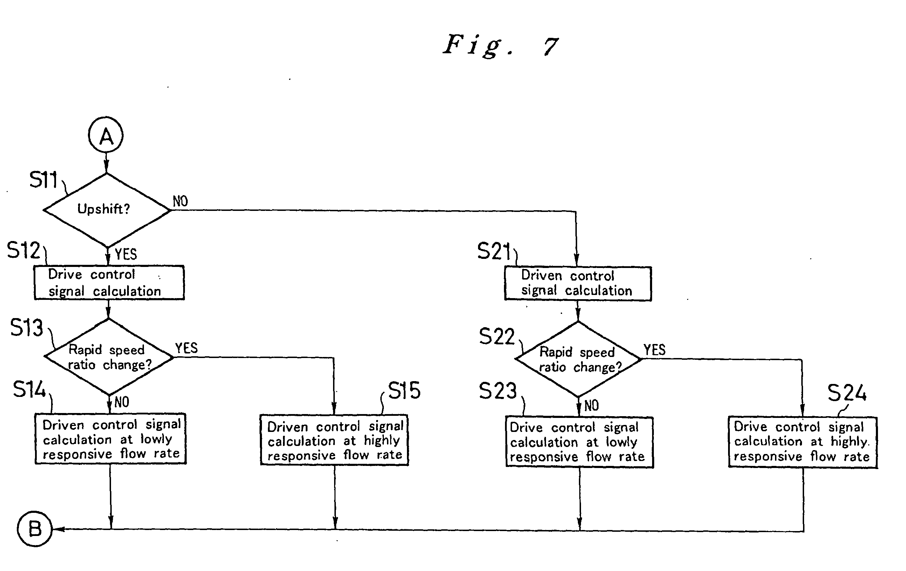

Now, the steps executed for the continuous speed ratio control are described in reference to the flowchart shown in FIGS. 6 and 7. In these drawings, the points marked with encircled "A" are connected to each other in flow while the points marked with encircled "B" are also connected to each other in flow, constituting one flowchart as a whole. The routine described in the flowchart is repeated at a predetermined cycle (for example, every 10 ms).

In this control flow, at first, the actual speed change ratio is determined at Step S1. For example, the ratio of the input and output rotational speeds of the metal V-belt mechanism 10 is calculated from the drive pulley rotational speed NDR, which is detected by the drive pulley rotation sensor 102, and the vehicle speed V, which is detected by the vehicle speed sensor 103. Then, a target speed ratio is calculated from the throttle opening θTH of the engine, which is detected by the throttle sensor 104, the vehicle speed V, etc., and a target ratio-changing rate is calculated to change the speed ratio from the current ratio to the target speed ratio at Step S2.

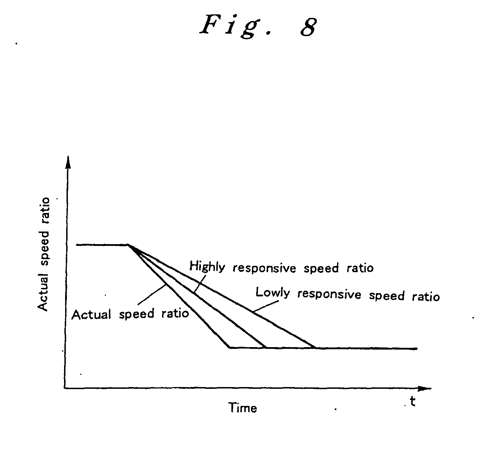

Then, a calculation is made to determine a target flow rate, at which oil is charged and discharged to and from the drive and driven cylinder chambers 14 and 19 to change the speed ratio from the actual ratio to the target speed ratio at the target ratio-changing rate at Step S3. The sizes of the drive and driven cylinder chambers 14 and 19 are known, so the speed at which the movable pulley halves 13 and 18 are to be shifted can be calculated from the target ratio-changing rate. Therefore, the target flow rate to achieve this speed for the shift of the movable pulley halves 13 and 18 can be calculated. At Step S4, the characteristic chronological change of the actual speed ratio is processed with a filter (low-pass filter) which has two levels of responsiveness, i.e., high responsiveness and low responsiveness, for achieving the characteristic chronological change of a highly responsive speed ratio (highly responsive ratio-changing rate), whose responsiveness is higher than the actual speed ratio, and that of a lowly responsive speed ratio (lowly responsive ratio-changing rate), whose responsiveness is lower as shown in FIG. 8.

Then, the control flow proceeds to Step S5, where the temperature of the oil in the hydraulic controller shown in FIGS. 3 and 4 is detected, and the detected temperature value is corrected if necessary. The temperature of the oil is measured directly with a temperature sensor, or it is estimated from the viscosity of the oil (or from a change in the flow resistance). Then, the existence of error is determined and corrected. Specifically, a calculation is made for the difference between the target flow rate calculated at Step S3 and the highly responsive flow rate necessary for the drive and driven cylinder chambers 14 and 19 to achieve a speed ratio change at the highly responsive ratio-changing rate calculated at Step S4, and if the difference is relatively large, then it is considered that the temperature of the oil detected includes an error. The detected value for the oil temperature is corrected on the basis of this difference.

At Step S6, a determination is made whether the transmission is in a speed ratio change or not. If it is not in a speed ratio change but in a constant driving condition, then the control flow proceeds to Step S7, where the current speed ratio is maintained. To maintain the speed ratio, the control signals applied to the solenoids 70a and 71a of the drive and driven control valves 70 and 71 are determined so that the hydraulic pressure applied to one of the drive and driven cylinder chamber 14 and 19 produces a thrust whose magnitude is only enough to prevent the belt from slipping while the hydraulic pressure applied to the other produces a thrust which is large enough to maintain the current speed ratio.

On the other hand, if the result of the determination at Step S6 is that the transmission is in a speed ratio change, then the control flow proceeds to Step S11, where another determination is made whether this speed ratio change is an upshift or a downshift. If this speed ratio change is an upshift, then the width of the drive pulley 11 is reduced while that of the driven pulley 16 is increased in the speed ratio control. If the speed ratio change is a downshift, then the width of the drive pulley 11 is increased while that of the driven pulley 16 is reduced.

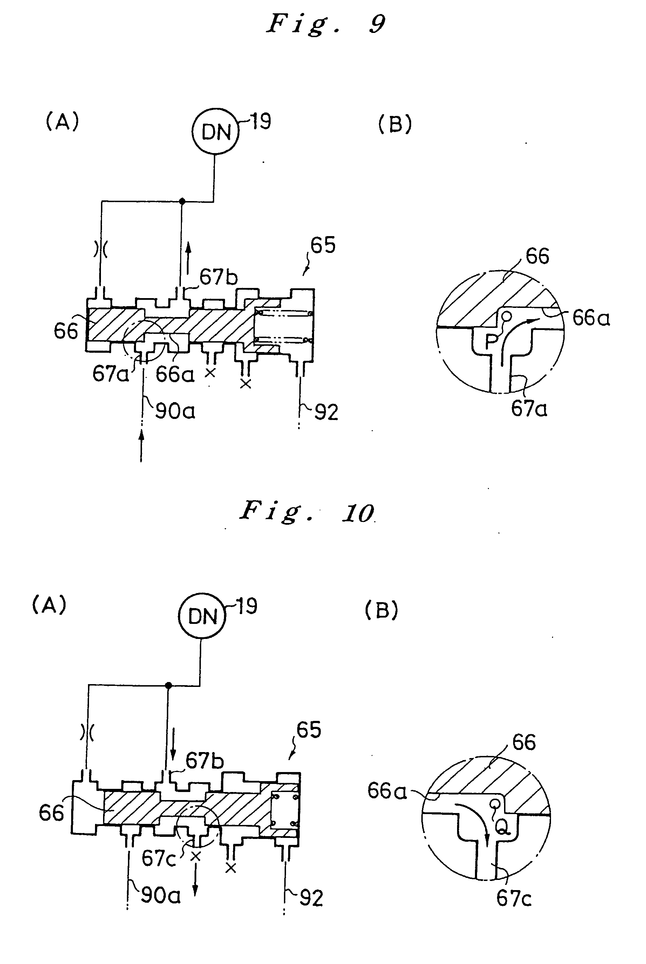

If the drive and driven cylinder chambers 14 and 19 are charged with oil, their widths will increase. On the other hand, if they are discharged of oil, their widths will decrease. The charge and discharge of oil to and from the drive and driven cylinder chambers is controlled by the drive and driven shift control valves 60 and 65, respectively. By the way, during the charge and discharge of oil, the spool of each shift control valve receives a flow force, whose effect is described in reference to FIGS. 9 and 10 for a case where the driven shift control valve 65 is operated to charge and discharge the driven cylinder chamber 19.

FIG. 9 shows the driven shift control valve 65, whose spool 66 is shifted leftward. In this condition, oil from port 67a connected to line 90a flows through a spool groove 66a to port 67b connecting to the driven cylinder chamber 19. FIG. 9B shows the vicinity of port 67a in enlargement. When oil flows as indicated by an arrow in the drawing, a negative pressure arises at a corner P of the spool groove 66a because of a flow force. Although the spool 66 is shown at the leftmost position in the drawing, which is a fully opened state, in reality, the leftward position of the spool 66 is adjusted by the driven signal pressure Pdn, which is supplied from line 92, to control the hydraulic pressure charging the driven cylinder chamber 19. During this adjustment, a negative pressure is created at the corner P by a flow force generated by the flow of the oil. This negative pressure acts to pull the spool 66 rightward and thereby to close the port 67a.

On the other hand, FIG. 10 shows the driven shift control valve 65, whose spool 66 is shifted rightward. In this condition, oil from port 67b connected to the driven cylinder chamber 19 flows through the spool groove 66a to port 67c connecting to the drain. FIG. 10B shows this part in enlargement. When oil flows as indicated by an arrow in the drawing, a negative pressure arises at a corner Q of the spool groove 66a. Although the spool 66 is shown at the rightmost position in the drawing, which is a fully opened state, in reality, the rightward position of the spool 66 is adjusted by the driven signal pressure Pdn, which is supplied from line 92, to control the discharge of oil from the driven cylinder chamber 19, thereby adjusting the pressure in the cylinder chamber. During this adjustment, a negative pressure is created at the corner Q by a flow force generated by the flow of the discharged oil. This negative pressure acts to pull the spool 66 leftward and thereby to close the port 67c.

This speed ratio control is to overcome the effect of the flow force acting as described above, so that the speed ratio change operation is executed smoothly and appropriately. In a case where the result of the determination at Step S11 is that the speed ratio change is an upshift, the control flow proceeds to Step S12, where a calculation is made for the control signal of the drive control valve 70 necessary for charging the drive cylinder chamber 14 so that the width of the drive pulley 11 will become smaller appropriately.

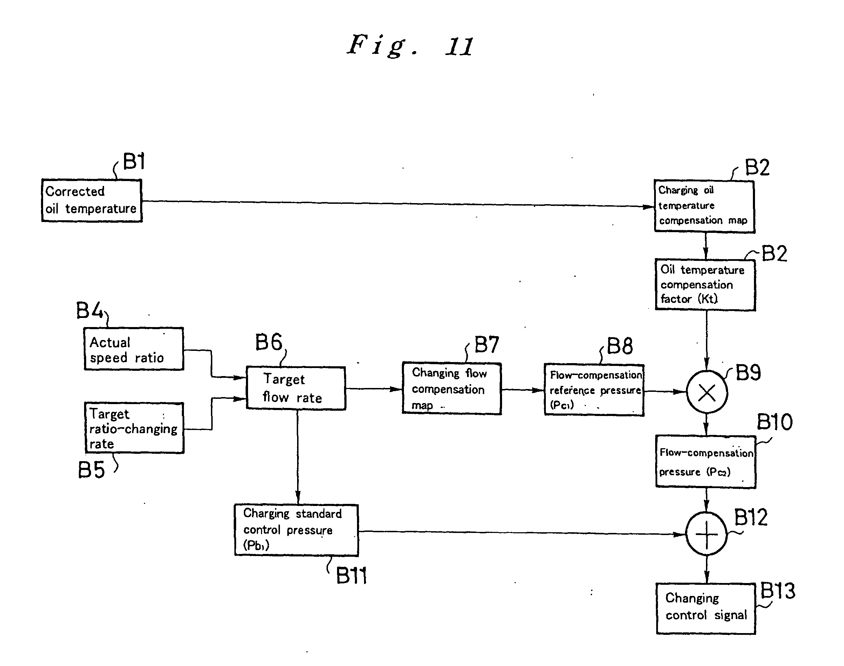

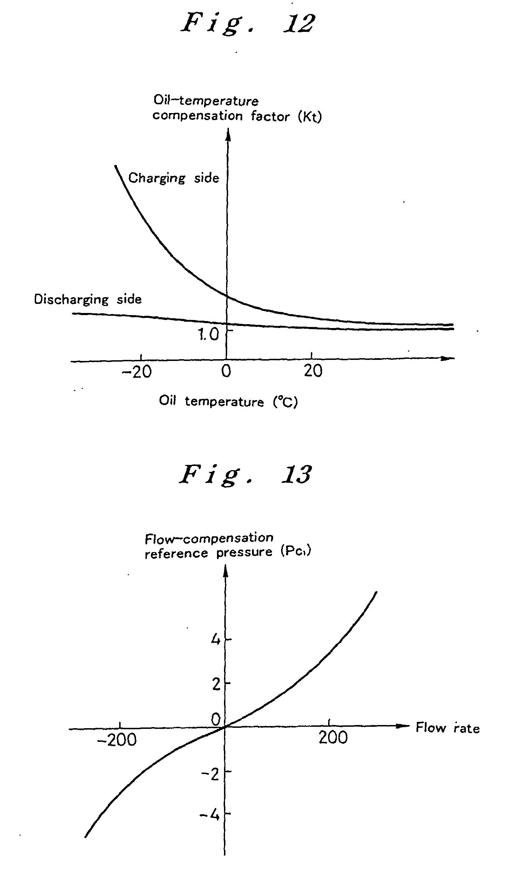

This calculation is described in reference to FIG. 11. Here, at first, a calculation is made for an oil-temperature compensation factor Kt, which is to take the effect of the viscosity at the current oil temperature into consideration, on a basis of the corrected oil temperature, which is detected and corrected at Step S5 (refer to blocks B1 ∼ B3 in FIG. 11). Values for the oil-temperature compensation factor Kt are predetermined against values of the oil temperature, experimentally by measurement or by calculation, and are mapped beforehand as shown in FIG. 12. Therefore, the oil-temperature compensation factor Kt is determined against the corrected oil temperature on the graph shown in FIG. 12. The graph of FIG. 12 describes the oil-temperature compensation factor Kt for the charging side and the oil-temperature compensation factor Kt for the discharging side. It is clear from the graph that the oil-temperature compensation factor Kt is set smaller for the discharging side. The reason is that it is better to make the factor of the discharging side small enough not to compensate the discharging flow excessively. Otherwise, a large amount of oil is discharged, and the thrust acting on the belt may become small enough to cause a slip of the belt.

As shown in blocks B4 ∼ B6, a target flow rate is calculated from the actual speed ratio and the target ratio-changing rate (calculation of the target flow rate at Step S1 ∼ Step S3). For this calculation, values (= flow rate/ratio-changing rate) for the flow rate necessary for achieving a speed ratio change at the ratio-changing rate are predetermined for every speed ratio and are stored in memory as a map of data. In the calculation, the value (flow rate/ratio-changing rate) for the actual speed ratio is read in from the map, and this value (flow rate/ratio-changing rate) is multiplied by the ratio-changing rate to gain the target flow rate.

Then, a flow-compensation reference pressure Pc1, which corresponds to the target flow rate, is calculated (refer to blocks B7 and B8). The flow-compensation reference pressure Pc1 is a compensation pressure that is necessary to offset the effect of the flow force caused by the oil at a normal oil temperature flowing through the drive and driven shift control valves 60 and 65 to the drive and driven cylinder chambers 14 and 19, which effect has been described above in reference to FIGS. 9 and 10. Values for the flow-compensation reference pressure are predetermined against values of the flow rate, experimentally or by calculation, and are stored in memory as a flow-compensation reference pressure map as shown in FIG. 13. In the map or graph of FIG. 13, positive values of the flow rate are charging flow rates while negative values are discharging flow rates. From this map, the flow-compensation reference pressure Pc1 is determined against the target flow rate.

The flow-compensation reference pressure Pc1 determined in this way is for a normal oil temperature, so the flow-compensation reference pressure Pc1 is multiplied by the oil-temperature compensation factor Kt, which is calculated at block B3, to gain a flow-compensation pressure Pc2 that corresponds to the current oil temperature (blocks B9 and B10).

In parallel with the execution of the steps described above, a calculation is made to determine a standard control pressure Pb1 that is to be set by the drive shift control valve 60 to charge the drive cylinder chamber 14 at the target flow rate (block B11). The standard control pressure Pb1 does not includes the consideration of the effect of the flow force generated by the oil flowing through the drive shift control valve 60 at the target flow rate. Therefore, the standard control pressure Pb1 is added with the flow-compensation pressure Pc2, which is calculated at block B10, to offset the effect of the flow force (block B12). Then, a calculation is made to determine the control current to be applied to the solenoid 70a of the drive control valve 70 so that this control pressure (Pb1 + Pc2) will be set by the drive shift control valve 60 (block B13).

After the drive control signal (control signal for the solenoid 70a to control the drive pulley) is calculated in this way at Step S12, the control flow proceeds to Step S13, where a determination is made whether this is a rapid speed ratio change or not. This is done by judging if the target ratio-changing rate, which is calculated at Step S2, is equal to or greater than a predetermined value.

If the result of the determination is that this speed ratio change is not rapid, i.e., a gradual ratio change, then the control flow proceeds to Step S14. Here, the control signal to be applied to the driven control valve 71 is determined so that the driven cylinder chamber 19 is discharged appropriately to increase the width of the driven pulley 16 for this gradual ratio change.

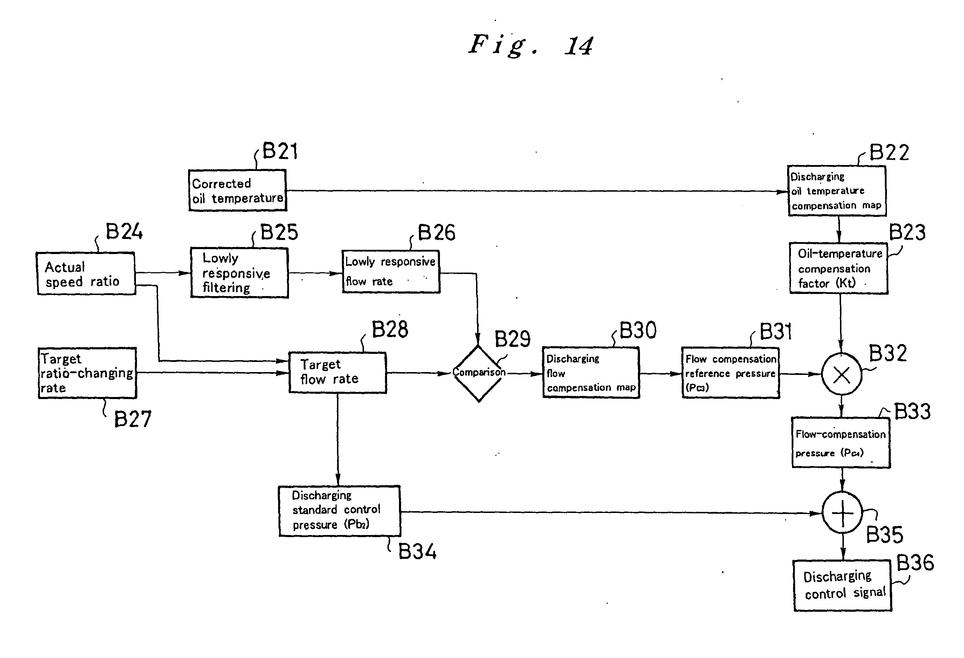

The calculation of this control signal is described in reference to FIG. 14. Here, also, a calculation is made for an oil-temperature compensation factor Kt, which is to take the effect of the viscosity at the current oil temperature into consideration, on a basis of the corrected oil temperature, which is detected and corrected at Step S5 (blocks B21 ∼ B23). This calculation of the oil-temperature compensation factor Kt is the same as that described above in reference to FIG. 11. However, in this case, the oil-temperature compensation factor Kt is determined against the corrected oil temperature on the curve representing the oil-temperature compensation factor for the discharging side in the graph of FIG. 12.

On the other hand, as shown in blocks B24 ∼ B26, a lowly responsive ratio-changing rate is calculated by processing the actual speed ratio with a lowly responsive filter (refer to FIG. 8 and Step S4), and also, a calculation is made for a lowly responsive flow rate at which the driven cylinder chamber 19 is discharged for performing the speed ratio change at the lowly responsive ratio-changing rate. The lowly responsive ratio-changing rate is calculated by differentiating the actual speed ratio with respect to time and by processing the differentiated value with a lowly responsive filter. Also, the calculation for the lowly responsive flow rate is performed in the same way as described above at block B4 ∼ B6. The value (flow rate/ratio-changing rate) that corresponds to the actual speed ratio is read in from the map, and this value (flow rate/ratio-changing rate) is multiplied by the lowly responsive ratio-changing rate to gain the lowly responsive flow rate.

Simultaneously, as shown in blocks B24, B27 and B28, a calculation is made for a target flow rate on a basis of the actual speed ratio and the target ratio-changing rate (calculation for a target flow rate at Steps S1 ∼S3). Then, this target flow rate is compared with the above lowly responsive flow rate, and the lower of the two is adopted as a new target flow rate (block B29). As explained previously, if a large amount of oil is discharged, the thrust acting on the belt may become small enough to cause a slip of the belt. Therefore, the lower of the two flow rates is selected as the target flow rate not to cause an excessive discharge.

Then, in correspondence to this target flow rate, a flow-compensation reference pressure Pc3 is calculated (blocks B30 and B31). The flow-compensation reference pressure Pc3 is a compensation pressure that is necessary to offset the effect of the flow force caused by the oil at a normal oil temperature flowing through the drive and driven shift control valves 60 and 65 to the drive and driven cylinder chambers 14 and 19. Values for the flow-compensation reference pressure are predetermined experimentally or by calculation and are stored in memory as a flow-compensation reference pressure map (not shown), which is similar to that shown in FIG. 13. From this map, the flow-compensation reference pressure Pc3 is determined against the target flow rate. The flow-compensation reference pressure Pc3 determined in this way is for a normal oil temperature, so the flow-compensation reference pressure Pc3 is multiplied by the oil-temperature compensation factor Kt which is calculated at block B23 to gain a flow-compensation pressure Pc4 that corresponds to the current oil temperature (blocks B32 and B33).

In parallel with the execution of these steps, a calculation is made to determine a standard control pressure Pb2 that is to be set by the driven shift control valve 65 to discharge the driven cylinder chamber 19 at the target flow rate (block B34). This standard control pressure Pb2 does not includes the consideration of the effect of the flow force generated by the oil flowing through the driven shift control valve 65 at the target flow rate. Therefore, this standard control pressure Pb2 is added with the flow-compensation pressure Pc4, which is calculated at block B33, to offset the effect of the flow force (block B35). Then, a calculation is made to determine the control current to be applied to the solenoid 71a of the driven control valve 71 so that this control pressure (Pb2 + Pc4) will be set by the driven shift control valve 65 (block B36).

By applying these drive and driven control signals, which are calculated at Step S12 and Step S14, to the solenoids 70a and 71a of the drive and driven control valves 70 and 71, a gradual upshift to the target speed ratio is smoothly performed at the target ratio-changing rate, which is calculated at Step S2.

The speed ratio control described above is for a case where the result of the determination at Step S13 is a gradual ratio change. Now, a description is made for a case where the result of the determination at Step S13 is a rapid ratio change. In this case, the control flow proceeds to Step S15, where the control signal to be applied to the driven control valve 71 is determined so that the driven cylinder chamber 19 is discharged appropriately to increase the width of the driven pulley 16 for this rapid ratio change.

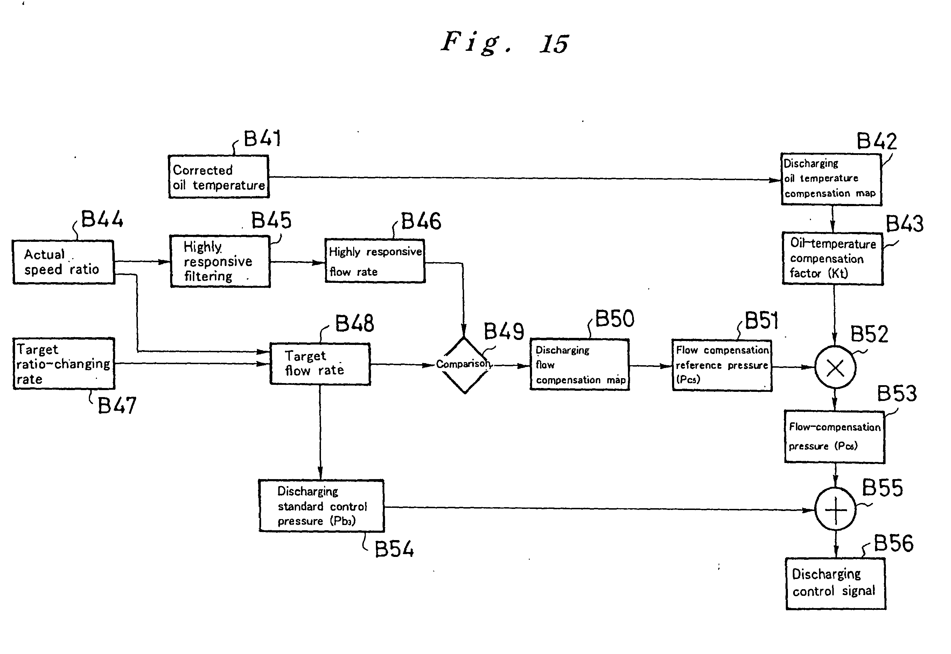

The calculation of this control signal is described in reference to FIG. 15. Here, also, a calculation is made for an oil-temperature compensation factor Kt, which is to take the effect of the viscosity at the current oil temperature into consideration, on a basis of the corrected oil temperature, which is detected and corrected at Step S5 (blocks B41 ∼ B43). This oil-temperature compensation factor Kt is determined from the curve representing the oil-temperature compensation factor for the discharging side in the graph of FIG. 12.

On the other hand, as shown in blocks B44 ∼ B46, a highly responsive ratio-changing rate is calculated by processing the actual speed ratio with a highly responsive filter, and also, a calculation is made for a highly responsive flow rate at which the driven cylinder chamber 19 is discharged for performing the speed ratio change at the highly responsive ratio-changing rate. The highly responsive filtering and the highly responsive flow rate calculation are executed in the same way as the lowly responsive filtering and the lowly responsive flow rate calculation. Simultaneously, as shown in blocks B44, B47 and B48, a calculation is made for a target flow rate on a basis of the actual speed ratio and the target ratio-changing rate (calculation for a target flow rate at Steps S1 ∼S3). Then, this target flow rate is compared with the above highly responsive flow rate, and the lower of the two is adopted as a new target flow rate (block B49). As mentioned previously, if a large amount of oil is discharged, the thrust acting on the belt may become small enough to cause a slip of the belt. Therefore, in this case, also, the lower of the two flow rates is selected as the target flow rate not to cause an excessive discharge.

Then, in correspondence to this target flow rate, a flow-compensation reference pressure Pc5 is calculated (blocks B50 and B51). Also, the flow-compensation reference pressure Pc5 is determined against the target flow rate on the flow-compensation reference pressure map. The flow-compensation reference pressure Pc5 determined in this way is for a normal oil temperature, so the flow-compensation reference pressure Pc5 is multiplied by the oil-temperature compensation factor Kt which is calculated at block B43 to gain a flow-compensation pressure Pc6 that corresponds to the current oil temperature (blocks B52 and B53).

In parallel with the execution of these steps, a calculation is made to determine a standard control pressure Pb3 that is to be set by the driven shift control valve 65 to discharge the driven cylinder chamber 19 at the target flow rate (block B54). This standard control pressure Pb3 does not include the consideration of the effect of the flow force generated by the oil flowing through the driven shift control valve 65 at the target flow rate. Therefore, this standard control pressure Pb3 is added with the flow-compensation pressure Pc6, which is calculated at block B53, to offset the effect of the flow force (block B55). Then, a calculation is made to determine the control current to be applied to the solenoid 71a of the driven control valve 71 so that this control pressure (Pb3 + Pc6) will be set by the driven shift control valve 65 (block B56).

By applying these drive and driven control signals, which are calculated at Step S12 and Step S15, to the solenoids 70a and 71a of the drive and driven control valves 70 and 71, a rapid upshift to the target speed ratio is smoothly performed at the target ratio-changing rate, which is calculated at Step S2.

The speed ratio control described above is for a case where the result of the determination at Step S11 is an upshift. Now, a description is made for a case where the result of the determination is a downshift. In this case, the control flow proceeds to Step S21, where the control signal to be applied to the driven control valve 71 is determined so that the driven cylinder chamber 19 is charged appropriately to decrease the width of the driven pulley 16. The determination of this control signal is executed in the same way as the determination of the control signal applied to the drive control valve 70 at Step S12, which is described in reference to FIG. 11. Therefore, no more description is offered here.

After the driven control signal (control signal applied to the solenoid 71a) is determined at Step S21, the control flow proceeds to Step S22, where a determination is made whether this is a rapid ratio change or not.

If the result of the determination is that this speed ratio change is not rapid, i.e., a gradual ratio change, then the control flow proceeds to Step S23. Here, the control signal to be applied to the drive control valve 70 is determined so that the drive cylinder chamber 14 is discharged appropriately to increase the width of the drive pulley 11 for this gradual ratio change. The determination of this control signal is executed in the same way as the determination of the control signal for a gradual ratio change applied to the driven control valve 71 at Step S14, which is described in reference to FIG. 14. Therefore, no detailed description is made here.

By applying these drive and driven control signals, which are calculated at Step S21 and Step S23, to the solenoids 70a and 71a of the drive and driven control valves 70 and 71, a gradual downshift to the target speed ratio is smoothly performed at the target ratio-changing rate, which is calculated at Step S2.

Now, a description is made for a case where the result of the determination at Step S22 is that this is a rapid ratio change. In this case, the control flow proceeds to Step S24, where the control signal to be applied to the drive control valve 70 is determined so that the drive cylinder chamber 14 is discharged appropriately to increase the width of the drive pulley 11 for this rapid ratio change. The determination of this control signal is executed in the same way as the determination of the control signal for a rapid ratio change applied to the driven control valve 71 at Step S15, which is described in reference to FIG. 15. Therefore, no detailed description is made here.

By applying these drive and driven control signals, which are calculated at Step S21 and Step S24, to the solenoids 70a and 71a of the drive and driven control valves 70 and 71, a rapid downshift to the target speed ratio is smoothly performed at the target ratio-changing rate, which is calculated at Step S2.

As described above, according to a feature of the present invention, a standard-operation control value for setting a target control pressure is calculated by standard-value calculating means on a basis of characteristics of a shift control valve in a steady state. This standard-operation control value is compensated with a compensation control value, which is calculated on a basis of a quantity of oil charged and discharged to and from a hydraulic actuator in speed ratio change. Therefore, the effect of a flow force generated by a flow through the shift control valve when oil is charged and discharge to and from the hydraulic actuator during the ratio-change transition is offset by the compensation control value. As a result, the speed ratio control is performed accurately without any delay in response even during a rapid ratio-change transition.

According to another feature of the present invention, a transmission comprises variable width drive and driven pulleys and belt means disposed around these pulleys, and a hydraulic controller for this transmission comprises a shift control valve, which controls the charge and discharge of oil to and from the cylinder chambers provided in the drive and driven pulleys, respectively. In the same way as described above, the hydraulic controller compensates the standard-operation control value with a compensation control value, which is calculated on a basis of the quantity of oil charged and discharged to and from the drive and driven cylinder chambers in the speed ratio change. Therefore, the effect of a flow force generated by a flow through the shift control valve when oil is charged and discharged to and from these pulley cylinder chambers during the ratio-change transition is offset by the compensation control value. As a result, the speed ratio control is performed accurately without any delay in response even during a rapid ratio-change transition.

When it is necessary for the cylinder chamber of the drive or driven pulley to be discharged of oil through the shift control valve at a ratio-changing rate in response to a speed ratio change request, preferably, oil-quantity calculating means calculates the quantity of oil to be discharged through the shift control valve from the pulley cylinder chamber, so as to determine the lower of the two ratio-changing rates, i.e., the ratio-changing rate processed by a filtering and the ratio-changing rate before this filtering. If the rate of discharging the cylinder chamber of oil during a ratio-change transition is too high, the lateral pressure of the pulley may become small enough to cause a slip of the belt. Therefore, the lower of the two, the ratio-changing rate filtered as described above and the ratio-changing rate prior to the filtering, is selected as the ratio-changing rate for the shift control valve to control the discharging pressure. In this way, any slip of the belt is prevented in the speed ratio control.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A hydraulic controller for a transmission comprising a ratio-change mechanism (10), which transmits rotational driving force from a drive power source changing a speed ratio, a hydraulic actuator (14, 19), which, by receiving a hydraulic pressure, actuates ratio-change operation of said ratio-change mechanism, and a shift control valve (60, 65), which performs a pressure control for charging and discharging oil to and from said hydraulic actuator;
said hydraulic controller comprising:
standard-value calculating means, which calculates a standard-operation control value for said shift control valve (60, 65) to set a target control pressure, said target control pressure bringing a ratio change in accordance to a ratio-change request made in correspondence to a driving condition;
oil-quantity calculating means, which calculates a quantity of oil to be charged and discharged to and from said hydraulic actuator (14, 19) through said shift control valve (60, 65) during the ratio change executed in accordance to said ratio-change request; and
compensation-value calculating means, which calculates a compensation control value to compensate said standard-operation control value on a basis of the quantity of oil charged and discharged, which quantity is calculated by said oil-quantity calculating means;
wherein:
an operation control value which is obtained by compensating said standard-operation control value with said compensation control value is used to control operation of said shift control valve (60, 65),
wherein:
said ratio-change mechanism comprises a variable width drive pulley (11), a variable width driven pulley (16) and belt means (15) disposed around these pulleys;
said hydraulic actuator comprises a drive cylinder chamber (14) provided in said drive pulley and a driven cylinder chamber (19) provided in said driven pulley;
said shift control valve (60, 65) performs a pressure control for charging and discharging oil to and from said drive and driven cylinder chambers (14, 19);
said standard-value calculating means calculates a standard-operation control value for said shift control valve (60, 65) to set target control pressures for said drive and driven cylinder chambers (14, 19), said target control pressures being necessary for bringing a ratio change in accordance to a ratio-change request made in correspondence to a driving condition; and
said oil-quantity calculating means calculates the quantity of oil to be charged and discharged to and from said drive and driven cylinder chambers (14, 19) through said shift control valve (60, 65) and a ratio-changing rate in accordance to said ratio-change request for bringing a ratio change in accordance to said ratio-change request,
wherein:
when it is necessary for said drive or driven cylinder chamber (14, 19) to be charged with oil through said shift control valve (60, 65) to achieve said ratio-changing rate, said oil-quantity calculating means calculates the quantity of oil to be charged to said drive or driven cylinder chamber (14, 19) through said shift control valve for achieving said ratio-changing rate;
**characterized in that**
when it is necessary for said drive or driven cylinder chamber (14, 19) to be discharged of oil through said shift control valve to achieve said ratio-changing rate, said oil-quantity calculating means calculates the quantity of oil to be discharged from said drive or driven cylinder chamber (14, 19) through said shift control valve for achieving the smaller one of the two rates: the said ratio-changing rate or a ratio-changing rate obtained by filtering an actual ratio-changing rate.

2. The hydraulic controller as set forth in claim 1,
wherein:
said shift control valve comprises a drive solenoid valve (60), which controls the charge and discharge of oil to and from said drive cylinder chamber (14), and a driven solenoid valve (65), which controls the charge and discharge of oil to and from said driven cylinder chamber (19); and
a control current that corresponds to the operation control value obtained by compensating said standard-operation control value with said compensation control value is used to control the operation of said drive and driven solenoid valves (60, 65).

3. The hydraulic controller as set forth in claim 1,
wherein:
said ratio-change request, which corresponds to the driving condition, is defined by a target speed ratio that is calculated on a basis of a speed ratio of said ratio-change mechanism, a degree of engine throttle opening and a vehicle speed and by a target ratio-changing rate for a change from a current speed ratio to said target speed ratio.

4. The hydraulic controller as set forth in any of claims 1 to 3, wherein:
said compensation control value, which is calculated by said compensation-value calculating means, is to offset an effect of a flow force generated by a flow through said shift control valve when a quantity of oil calculated by said oil-quantity calculating means is charged or discharged.

5. The hydraulic controller as set forth in any of claims 1 to 4, wherein:
said compensation-value calculating means determines said compensation control value in correspondence to an oil temperature.

## Patentansprüche

1. Hydraulischer Controller für ein Getriebe, das einen Verhältnisänderungsmechanismus (10) aufweist, der eine Drehantriebskraft von einer Antriebsquelle bei Änderung eines Geschwindigkeitsverhältnisses überträgt, einen hydraulischen Aktuator (14, 19), der durch Erhalt von Hydraulikdruck einen Verhältnisänderungsbetrieb des Verhältnisänderungsmechanismus aktiviert, sowie ein Schaltsteuerventil (60, 65), das eine Drucksteuerung/-regelung zum Laden und Entladen von Öl zu und von dem hydraulischen Aktuator durchführt;
wobei der hydraulische Controller umfasst:
ein Standardwert-Berechnungsmittel, das einen Standardbetriebssteuerungswert für das Schaltsteuerventil (60, 65) zum Setzen eines Soll-Steuerdrucks berechnet, wobei der Soll-Steuerdruck eine Verhältnisänderung gemäß einer Verhältnisänderungsanforderung, die entsprechend einem Fahrzustand erfolgt, erbringt;
ein Ölmengen-Berechnungsmittel, das eine Ölmenge berechnet, die während einer gemäß der Verhältnisänderungsanforderung ausgeführten Verhältnisänderung durch das Schaltsteuerventil (60, 65) zu dem hydraulischen Aktuator (14, 19) geladen und davon entladen werden soll; und
ein Kompensationswert-Berechnungsmittel, das einen Kompensationssteuerungswert berechnet, um den Standardbetriebssteuerungswert zu kompensieren, auf der Basis der geladenen und entladenen Ölmenge, welche Menge von dem Ölmengen-Berechnungsmittel berechnet wird;
worin:
ein Betriebssteuerungswert, der durch Kompensieren des Standardbetriebssteuerungswerts mit dem Kompensationssteuerungswert erhalten wird, beim Steuerungs-/Regelungsbetrieb des Schaltsteuerventils (60, 65) verwendet wird,
worin:
der Verhältnisänderungsmechanismus eine Antriebsriemenscheibe (11) mit variabler Breite, eine Abtriebsriemenscheibe (16) mit variabler Breite sowie ein um diese Riemenscheiben herumgelegtes Riemenmittel (15) aufweist;
der hydraulische Aktuator eine in der Antriebriemenscheibe vorgesehene Antriebszylinderkammer (14) und eine in der Abtriebsriemenscheibe vorgesehene Abtriebszylinderkammer (19) aufweist;
das Schaltsteuerventil (60, 65) eine Drucksteuerung/-regelung zum Laden und Entladen von Öl zu und von den Antriebs- und Abtriebszylinderkammern (14, 19) durchführt;
das Standardwert-Berechnungsmittel einen Standardbetriebssteuerungswert für das Schaltsteuerventil (60, 65) berechnet, um Soll-Steuerdrücke für die Antriebs- und Abtriebszylinderkammern (14, 19) zu setzen, wobei die Soll-Steuerdücke erforderlich sind, um eine Verhältnisänderung gemäß einer entsprechend einem Fahrzustand durchgeführten Verhältnisänderungsanforderung zu erbringen; und
das Ölmengen-Berechnungsmittel die Ölmenge, die durch das Schaltsteuerventil (60, 65) zu den Antriebs- und Abtriebszylinderkammern (14, 19) geladen und davon entladen werden soll, und eine Verhältnisänderungsrate gemäß der Verhältnisänderungsanforderung berechnet, um eine Verhältnisänderung gemäß der Verhältnisänderungsanforderung zu erbringen,
worin:
wenn es erforderlich ist, dass die Antriebs- oder Abtriebszylinderkammer (14, 19) durch das Schaltsteuerventil (60, 65) mit Öl geladen werden soll, um die Verhältnisänderungsrate zu erzielen, das Ölmengen-Berechnungsmittel die Ölmenge, die durch das Schaltsteuerventil zu der Antriebs- oder Abtriebszylinderkammer (14, 19) geladen werden soll, berechnet, um die Verhältnisänderungsrate zu erzielen;
**dadurch gekennzeichnet, dass**,
wenn es erforderlich ist, dass die Antriebs- oder Abtriebszylinderkammer (14, 19) durch das Schaltsteuerventil vom Öl entladen werden soll, um die Verhältnisänderungsrate zu erzielen, das Ölmengen-Berechnungsmittel die Ölmenge, die durch das Schaltsteuerventil von der Antriebs- oder Abtriebszylinderkammer (14, 19) entladen werden soll, berechnet, um die kleinere der zwei Raten zu erzielen: der Verhältnisänderungsrate oder einer Verhältnisänderungsrate, die durch Filtern einer Ist-Verhältnisänderungsrate erhalten wird.

2. Der hydraulische Controller nach Anspruch 1, worin:
das Schaltsteuerventil ein Antriebs-Solenoid-Ventil (60) aufweist, das das Laden und Entladen des Öls zu und von der Antriebszylinderkammer (14) steuert/regelt, sowie ein Abtriebs-Solenoid-Ventil (65), das das Laden und Entladen des Öls zu und von der Abtriebszylinder kammer (19) steuert/regelt; und
ein Steuerstrom, der dem durch Kompensieren des Standardbetriebssteuerwerts mit dem Kompensationssteuerwert erhaltenen Betriebssteuerungswert entspricht, dazu benutzt wird, den Betrieb der Antriebs- und Abtriebs-Solenoid-Ventile (60, 65) zu steuern/regeln.

3. Der hydraulische Controller nach Anspruch 1, worin:
die Verhältnisänderungsanforderung, die dem Fahrzustand entspricht, definiert ist durch ein Soll-Geschwindigkeitsverhältnis, das auf der Basis eines Geschwindigkeitsverhältnisses des Verhältnisänderungsmechanismus, einem Grad der Motordrosselöffnung und einer Fahrzeuggeschwindigkeit berechnet wird, und durch eine Soll-Verhältnisänderungsrate für eine Änderung von einem gegenwärtigen Geschwindigkeitsverhältnis zu dem Soll-Geschwindigkeitsverhältnis.

4. Der hydraulische Controller nach einem der Ansprüche 1 bis 3, worin:
der Kompensationssteuerungswert, der von dem Kompensationswert-Berechnungsmittel berechnet wird, dazu dient, einen Effekt einer durch Strömung durch das Schaltsteuerventil erzeugten Strömungskraft zu beseitigen, wenn eine von dem Ölmengen-Berechnungsmittel berechnete Ölmenge geladen oder entladen wird.

5. Der hydraulische Controller nach einem der Ansprüche 1 bis 4, worin:
das Kompensationswert-Berechnungsmittel den Kompensationssteuerungswert entsprechend einer Öltemperatur bestimmt.

## Revendications

1. Régulateur hydraulique pour transmission comprenant un mécanisme de changement de rapport (10), qui transmet une force d'entraînement en rotation depuis une source d'entraînement changeant un rapport de vitesse, un actionneur hydraulique (14, 19), qui, en recevant une pression hydraulique, actionne un fonctionnement de changement de rapport dudit mécanisme de changement de rapport, et une soupape de commande des vitesses (60, 65), qui effectue une régulation de pression pour charger et décharger l'huile dans et depuis ledit actionneur hydraulique ;
ledit régulateur hydraulique comprenant :
des moyens de calcul de valeur type, qui calculent une valeur de commande de fonctionnement type pour ladite soupape de commande des vitesses (60, 65) pour établir une pression de commande cible, ladite pression de commande cible entraînant un changement de rapport en conformité avec une demande de changement de rapport faite en correspondance avec une condition de conduite ;
des moyens de calcul de quantité d'huile, qui calculent une quantité d'huile à charger et décharger dans et depuis ledit actionneur hydraulique (14, 19) par l'intermédiaire de ladite soupape de commande des vitesses (60, 65) pendant le changement de rapport exécuté en conformité avec ladite demande de changement de rapport ; et
des moyens de calcul de valeur de compensation, qui calculent une valeur de commande de compensation pour compenser ladite valeur de commande de fonctionnement type sur une base de la quantité d'huile chargée et déchargée, laquelle quantité est calculée par lesdits moyens de calcul de quantité d'huile ;
dans lequel :
une valeur de commande de fonctionnement qui est obtenue en compensant ladite valeur de commande de fonctionnement type avec ladite valeur de commande de compensation est utilisée pour commander le fonctionnement de ladite soupape de commande des vitesses (60, 65),
dans lequel :
ledit mécanisme de changement de rapport comprend une poulie entraîneuse à largeur variable (11), une poulie entraînée à largeur variable (16) et des moyens formant courroie (15) disposé autour de ces poulies ;
ledit actionneur hydraulique comprend une chambre de cylindre entraîneur (14) disposée dans ladite poulie entraîneuse et une chambre de cylindre entraîné (19) disposée dans ladite poulie entraînée ;
ladite soupape de commande des vitesses (60, 65) effectue une régulation de pression pour charger et décharger l'huile dans et depuis lesdites chambres de cylindre entraîneur et entraîné (14, 19) ;
lesdits moyens de calcul de valeur type calculent une valeur de commande de fonctionnement type pour que ladite soupape de commande des vitesses (60, 65) établisse des pressions de régulation cibles pour lesdites chambres de cylindre entraîneur et entraîné (14, 19), lesdites pressions de régulation cibles étant nécessaires pour entraîner un changement de rapport en conformité avec une demande de changement de rapport faite en correspondance avec une condition de conduite ; et
lesdits moyens de calcul de quantité d'huile calculent la quantité d'huile à charger et décharger dans et depuis lesdites chambres de cylindre entraîneur et entraîné (14, 19) par l'intermédiaire de ladite soupape de commande des vitesses (60, 65) et une vitesse de changement de rapport en conformité avec ladite demande de changement de rapport pour entraîner un changement de rapport en conformité avec ladite demande de changement de rapport,
dans lequel :
lorsqu'il est nécessaire que ladite chambre de cylindre entraîneur ou entraîné (14, 19) devant être chargée en huile par l'intermédiaire de ladite soupape de commande des vitesses (60, 65) atteigne ladite vitesse de changement de rapport, lesdits moyens de calcul de quantité d'huile calculent la quantité d'huile à charger dans ladite chambre de cylindre entraîneur ou entraîné (14, 19) par l'intermédiaire de ladite soupape de commande des vitesses pour atteindre ladite vitesse de changement de rapport ;
**caractérisé en ce que**
lorsqu'il est nécessaire que ladite chambre de cylindre entraîneur ou entraîné (14, 19) devant être déchargée en huile par l'intermédiaire de ladite soupape de commande des vitesses atteigne ladite vitesse de changement de rapport, lesdits moyens de calcul de quantité d'huile calculent la quantité d'huile à décharger depuis ladite chambre de cylindre entraîneur ou entraîné (14, 19) par l'intermédiaire de ladite soupape de commande des vitesses pour atteindre la plus petite des deux vitesses entre ladite vitesse de changement de rapport ou une vitesse de changement de rapport obtenue en filtrant une vitesse de changement de rapport effective.

2. Régulateur hydraulique selon la revendication 1,
dans lequel :
ladite soupape de commande des vitesses comprend une électrovanne entraîneuse (60), qui commande la charge et la décharge d'huile dans et depuis ladite chambre de cylindre entraîneur (14), et une électrovanne entraînée (65), qui commande la charge et la décharge d'huile dans et depuis ladite chambre de cylindre entraîné (19) ; et
un courant de commande qui correspond à la valeur de commande de fonctionnement obtenue en compensant ladite valeur de commande de fonctionnement type avec ladite valeur de commande de compensation est utilisé pour commander le fonctionnement desdites électrovannes entraîneuse et entraînée (60, 65).

3. Régulateur hydraulique selon la revendication 1,
dans lequel :
ladite demande de changement de rapport, qui correspond à la condition d'entraînement, est définie par un rapport de vitesse cible qui est calculé sur une base d'un rapport de vitesse dudit mécanisme de changement de rapport, un degré d'ouverture de papillon moteur et une vitesse de véhicule et par une vitesse de changement de rapport cible pour un changement d'un rapport de vitesse actuel audit rapport de vitesse cible.

4. Régulateur hydraulique selon l'une quelconque des revendications 1 à 3, dans lequel :
ladite valeur de commande de compensation, qui est calculée par lesdits moyens de calcul de valeur de compensation, doit décaler un effet d'une force d'écoulement générée par un écoulement à travers ladite soupape de commande des vitesses lorsqu'une quantité d'huile calculée par lesdits moyens de calcul de quantité d'huile est chargée ou déchargée.

5. Régulateur hydraulique selon l'une quelconque des revendications 1 à 4, dans lequel :
lesdits moyens de calcul de valeur de compensation déterminent ladite valeur de commande de compensation en correspondance avec une température d'huile.
